# EUROPEAN PATENT SPECIFICATION

(11) **EP 2 977 700 B1**
(45) Date of publication and mention of the grant of the patent: **31.05.2017**
(21) Application number: 14767940.1
(22) Date of filing: 06.02.2014
(51) Int. Cl.: F28D 15/02, G21C 15/18, G21C 15/257

(54) **COOLER, COOLING DEVICE USING SAME, AND METHOD FOR COOLING HEAT GENERATION ELEMENT**
KÜHLER, KÜHLVORRICHTUNG DAMIT UND VERFAHREN ZUR KÜHLUNG EINES WÄRMEERZEUGUNGSELEMENTS
REFROIDISSEUR, DISPOSITIF DE REFROIDISSEMENT QUI UTILISE CE DERNIER ET PROCÉDÉ PERMETTANT DE REFROIDIR UN ÉLÉMENT GÉNÉRATEUR DE CHALEUR

(30) Priority: 18.03.2013 JP 2013055533; 19.12.2013 JP 2013262872
(43) Date of publication of application: 27.01.2016
(73) Proprietor: National University Corporation Yokohama National University, Yokohama-shi, Kanagawa 240-8501 (JP)
(72) Inventor: MORI,Shoji, Yokohama-City Kanagawa 240-8501 (JP); MARUOKA,Naru, Yokohama-City Kanagawa 240-8501 (JP); OKUYAMA,Kunito, Yokohama-City Kanagawa 240-8501 (JP); HARADA,Tohru, Yokohama-City Kanagawa 240-8501 (JP); SUAZLAN, Bin Mt Aznam, Yokohama-City Kanagawa 240-8501 (JP)
(74) Representative: Yeadon IP Limited
(86) International application number: PCT/JP2014/052783
(87) International publication number: WO 2014/148137

(56) References cited:
- EP-A1- 2 009 146
- DE-A1-102011 011 688
- JP-A- 2000 049 266
- JP-A- 2008 039 378
- JP-A- 2009 139 005
- JP-A- 2009 139 005
- JP-A- 2009 250 810
- JP-A- 2010 151 354
- JP-A- 2012 032 276
- JP-A- 2012 043 954
- JP-A- 2013 243 249
- US-A1- 2005 280 996
- US-A1- 2007 240 855
- US-B1- 6 227 287

## Description

### BACKGROUND OF THE INVENTION

### Field of the Invention

The present invention relates to a cooler, a cooling apparatus using the same, and a method for cooling a heat generation element. In particular, the present invention relates to a boiling system cooler, a cooling apparatus using the same, and a method for cooling a heat generation element.

### Description of the Related Art

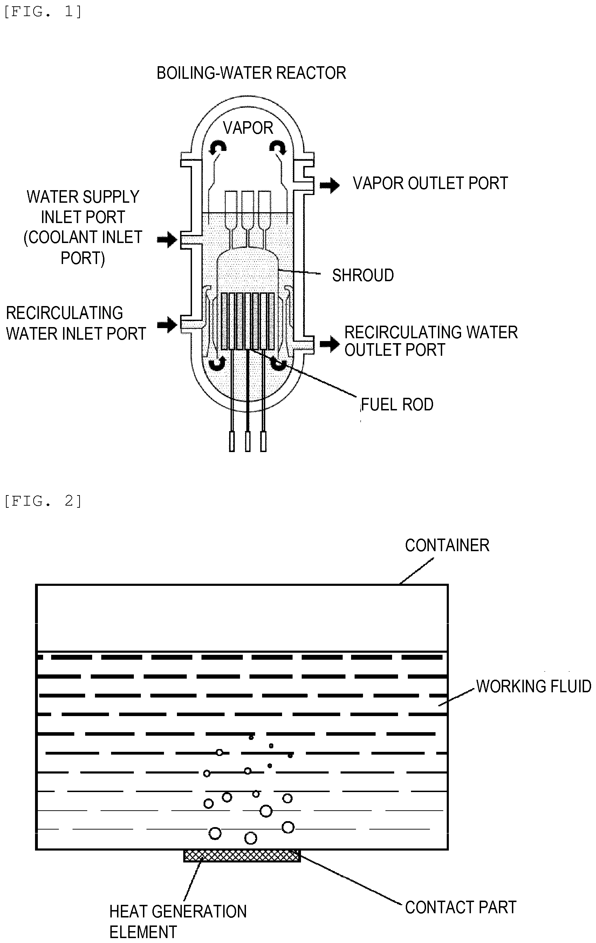

In recent years, a pressure vessel of a light-water reactor as shown in FIG. 1 requires a cooling mechanism for cooling a bottom part of a pressure vessel of a reactor with water from the outside to prevent melt-through even if a fuel rod causes a melt accident. A boil cooling system has been known as such a cooling mechanism.

Examples of the boil cooling system include a pool boiling system and a forced flow boiling system. Herein, a general pool boiling system cooling mechanism for a heat generation element will be described. FIG. 2 shows a conventional pool boiling system cooler. The cooler includes a container and a working fluid accommodated in the container. The container includes a contact part which is in contact with a heat generation element to be cooled. When heat is generated in the heat generation element, and transmitted to the working fluid through the contact part, the working fluid which is present near the contact part is boiled. When vapor is generated by the boiling, the working fluid is supplied to the contact part according to a difference between a gas density and a liquid density. The working fluid thus newly supplied is further vaporized to remove the heat from the heat generation element. The pool boiling system cooler eliminates the need for an external power source for circulating a liquid as in the forced flow boiling system, and has advantageous compactability and energy saving.

### SUMMARY OF THE INVENTION

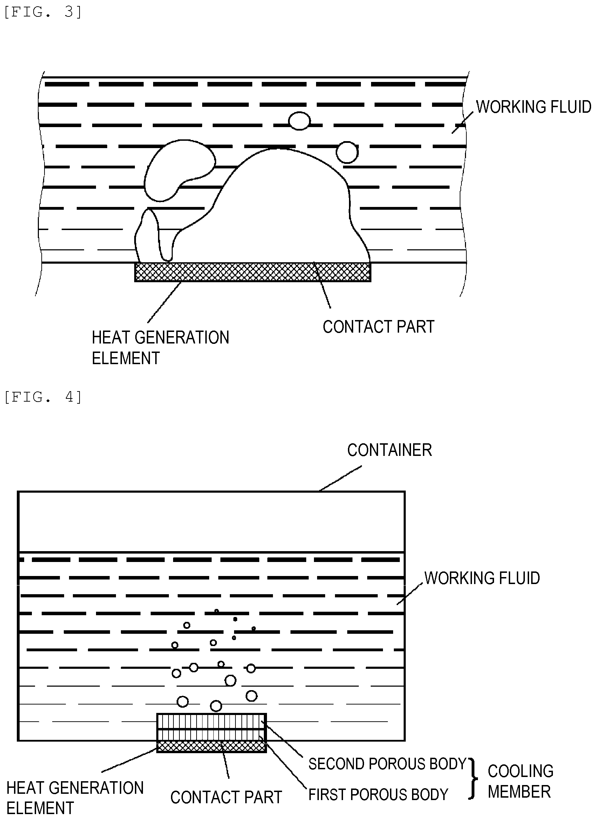

However, when a large heat flux is added to the contact part, the conventional pool boiling system cooler has a problem. The situation is shown in FIG. 3. As the heat flux is increased, the amount of vaporization of the working fluid is increased, which starts the covering of the contact part with the vapor. When the contact part is in a drying state where the vapor completely covers the contact part, and the working fluid is not supplied to the contact part, the cooling capacity of the cooler is remarkably deteriorated. The heat flux in this state is referred to as a "critical heat flux".

The critical heat flux of the conventional pool boiling system cooler is about 1000 kW/m² under a condition of atmospheric pressure in the presence of water in a saturation state (see S. G. Kandlikar, M. Shoji, and V. K. Dhir, "Handbook of Phase Change: Boiling and Condensation," Taylor & Francis, 1999). Meanwhile, the cooler requires a critical heat flux of at least about 2000 kW/m² or more in order to prevent the melt-through of the bottom part of the reactor pressure vessel of the light-water reactor.

On the other hand, the present inventors dramatically increase a conventional critical heat flux in a simple structure in Japanese Patent Laid-Open No. 2009-139005. In the simple structure, a porous body is provided between a heat generation element and water in a cooling container. While water is supplied to the heat generation element by the capillary action of the porous body, vapor generated by supplying the water is discharged into the water in the container. However, in order to more safely prevent the melt-through of the bottom part of the reactor pressure vessel, it has been desired to develop a cooler exhibiting a further improved cooling effect.

It is an object of the present invention to provide a cooler which has a simple structure and stably exhibits a good cooling effect, a cooling apparatus using the same, and a method for cooling a heat generation element.

After intensive investigations, the present inventors found that a porous body disclosed in Japanese Patent Laid-Open No. 2009-139005 is provided as a first porous body on a heat generation element side, and a second porous body having a permeability higher than that of the first porous body is provided on a working fluid side so as to overlap with the first porous body, which can provide a cooler exhibiting a further improved cooling effect, although the detail of the investigations will be described later.

That is, one aspect of the present invention is a boiling system cooler for cooling a heat generation element. The boiling system cooler includes: a container accommodating a working fluid; and a cooling member provided in the container so as to be brought into contact with the working fluid and to face the heat generation element. The cooling member has a stacked structure including a first porous body provided on the heat generation element side and a second porous body provided on the working fluid side. The first porous body includes: a first working fluid supply part supplying the working fluid, by capillary action, to a contact part which is in contact with the heat generation element; and a first vapor discharge part discharging vapor generated in the contact part to the second porous body side. The second porous body includes: a second working fluid supply part supplying the working fluid to the first porous body; and a second vapor discharge part discharging the vapor discharged from the first porous body, into the working fluid. The second porous body has a higher permeability of the working fluid compared with the first porous body.

In the cooler according to one embodiment of the present invention, the second porous body has a pore radius greater than that of the first porous body and/or a void ratio greater than that of the first porous body, to set the permeability of the working fluid to be higher compared with the first porous body.

In the cooler according to another embodiment of the present invention, both the first and second porous bodies include an aggregate of porous particles.

In the cooler according to another embodiment of the present invention, both the first and second porous bodies include a porous layer.

In the cooler according to another embodiment of the present invention, one of the first and second porous bodies includes an aggregate of porous particles, and the other includes a porous layer.

In the cooler according to another embodiment of the present invention, the first porous body includes an aggregate of porous nanoparticles, and the second porous body includes a porous layer having a mesh structure.

In the cooler according to another embodiment of the present invention, the first porous body includes a porous layer, and the first vapor discharge part is a pore penetrating the porous layer.

In the cooler according to another embodiment of the present invention, a clearance region is formed between the first porous body and the contact part which is in contact with the heat generation element.

In the cooler according to another embodiment of the present invention, the second porous body is made of a metal.

In the cooler according to another embodiment of the present invention, the second porous body made of the metal has an end fixed to the heat generation element by welding.

The cooler according to another embodiment of the present invention further includes a heat release fin welded to the heat generation element, and the second porous body is fixed to the heat release fin by welding.

Another aspect of the present invention is a cooling apparatus including: the cooler of the present invention; and a condenser connected to a container included in the cooler and liquidizing a vaporized working fluid.

Another aspect of the present invention is a boiling system cooling method for at least partially immersing a heat generation element in a working fluid accommodated in a container to cool the heat generation element. The cooling method includes attaching a cooling member to a surface of a portion of the heat generation element immersed in the working fluid. The cooling member has a stacked structure including a first porous body provided on the heat generation element side and a second porous body provided on the working fluid side. The first porous body includes: a first working fluid supply part supplying the working fluid, by capillary action, to a contact part which is in contact with the heat generation element; and a first vapor discharge part discharging vapor generated in the contact part to the second porous body side. The second porous body includes: a second working fluid supply part supplying the working fluid to the first porous body; and a second vapor discharge part discharging the vapor discharged from the first porous body, into the working fluid. The second porous body has a higher permeability of the working fluid compared with the first porous body.

In the cooling method according to one embodiment of the present invention, nanoparticles are dispersed in the working fluid; and the second porous body including a porous layer having a mesh structure is provided on the surface of the portion of the heat generation element immersed in the working fluid. An aggregate of porous nanoparticles is constituted by depositing the nanoparticles in the working fluid boiled by heat from the heat generation element on a heating surface of the heat generation element, to form the first porous body between the heat generation element and the second porous body, which attaches the cooling member to the surface of the portion of the heat generation element immersed in the working fluid.

The cooler of the present invention, the cooling apparatus using the same, and the method for cooling the heat generation element exhibit at least the following effects.
(1) The critical heat flux can be achieved, which is about 2000 kW/m² required in order to prevent the melt-through of the bottom part of the reactor pressure vessel, or about 2500 kW/m² or more.
(2) Since the liquid is forcibly supplied to the contact part by capillary action when the vapor is generated in the working fluid supply part of the first porous body and the contact part, the container (water tank) accommodating the working fluid such as water can use a mere puddle without having the necessity of including a flow passage of water or a pump or the like in the case of the pool boiling cooling system. This can provide a simple structure, which provides a low installation cost and a low running cost.
(3) The porous body provided on the contact part which is in contact with the heat generation element is preferably thinner from the viewpoint of a capillary limit mechanism. When the porous body is too thin, dryout is apt to be produced in the porous body while a coalesced bubble is retained in the upper part of the porous body, which causes a decrease in the critical heat flux. In the present invention, the porous body provided on the contact part which is in contact with the heat generation element is the first porous body, and the second porous body having a higher permeability of the working fluid compared with the first porous body is provided on the first porous body (on the working fluid side). Such a constitution can suppress the occurrence of the dryout to prevent the decrease in the critical heat flux even if the thickness of the first porous body is decreased. This is because the second porous body plentifully supplying the working fluid toward the first porous body is present between the first porous body and vapor mass above the first porous body.

### BRIEF DESCRIPTION OF THE DRAWINGS

FIG. 1 is a schematic view of a pressure vessel of a light-water reactor (a boiling-water reactor as one example);
FIG. 2 is a schematic view of a conventional pool boiling system cooler;
FIG. 3 illustrates the critical heat flux of the conventional pool boiling system cooler;
FIG. 4 is a schematic view of a pool boiling system cooler according to a first embodiment;
FIG. 5A is a top view of a first porous body;
FIG. 5B is a top view of a second porous body;
FIG. 5C is a 5-5 sectional view in a state where a cooling member is provided in a contact part;
FIG. 6 is a schematic view of a cooler provided in a bottom part of a reactor pressure vessel of a light-water reactor according to a second embodiment;
FIG. 7 is a schematic view of an embodiment in which a second porous body has an end fixed to a bottom part of a reactor pressure vessel which is a heat generation element by welding;
FIG. 8A is a schematic view of a form in which both a first porous body and a second porous body include an aggregate of porous particles;
FIG. 8B is a schematic view of a form in which both the first and second porous bodies include a porous layer;
FIG. 8C is a schematic view of a form in which one of the first and second porous bodies includes an aggregate of porous particles, and the other includes a porous layer;
FIG. 9 shows a cooling apparatus according to a third embodiment;
FIG. 10 is a schematic view of a variant form of the cooling apparatus according to the third embodiment;
FIG. 11 is a schematic view of an experiment device used in test examples 1 and 2;
FIG. 12 shows a boiling curve obtained in the test example 1;
FIG. 13 shows a boiling curve obtained in test example 2;
FIG. 14 is a schematic view of a cooling apparatus according to a fifth embodiment in which a first porous body includes an aggregate of porous nanoparticles, and a second porous body includes a porous layer having a mesh structure;
FIG. 15A is an observation photograph of a ground heating surface produced in test example 3;
FIG. 15B is an observation photograph of a heating surface coated with nanoparticles, produced in the test example 3; and
FIG. 16 shows a boiling curve obtained in the test example 3.

### DETAILED DESCRIPTION OF THE PREFERRED EMBODIMENTS

Hereinafter, embodiments of the present invention will be described in detail with reference to the drawings.

### (First Embodiment)

FIG. 4 shows a pool boiling system cooler according to a first embodiment. The cooler includes a container accommodating a working fluid; and a cooling member provided in the container so as to be brought into contact with the working fluid and to face a heat generation element. The cooling member has a stacked structure including a first porous body provided on the heat generation element side and a second porous body provided on the working fluid side.

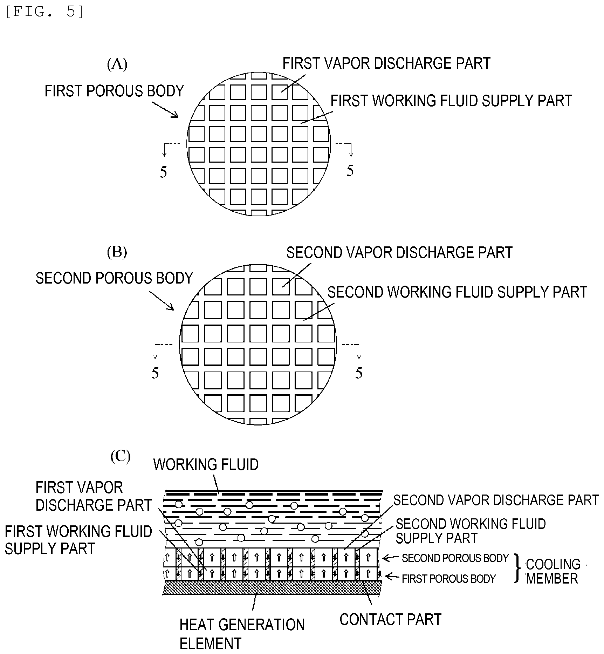

FIG. 5 shows the cooling member according to the present embodiment. FIG. 5A is a top view of the first porous body. FIG. 5B is a top view of the second porous body. FIG. 5C is a 5-5 sectional view in a state where the cooling member is provided in a contact part. The first porous body includes a first working fluid supply part and a first vapor discharge part as shown in FIG. 5A. The first working fluid supply part supplies the working fluid, by capillary action, to the contact part which is in contact with the heat generation element. The first vapor discharge part discharges vapor generated by heat from the heat generation element to the second porous body side from the contact part. In the present embodiment, the first porous body includes a porous layer. For example, the porous layer has a mesh structure having a number of rectangular pores. A lattice-shaped porous layer portion provided around the rectangular pore functions as the first working fluid supply part supplying the working fluid to the contact part by capillary action. The rectangular pore functions as the first vapor discharge part discharging the vapor generated in the contact part to the second porous body side. Thus, the supply of the working fluid and the discharge of the vapor are performed in separate courses, and thereby the occurrence of a problem that the vapor covers the contact part, which causes the restriction of a critical heat flux, can be suppressed, as described with reference to FIG. 3. As shown in FIG. 5B, the second porous body includes a porous layer as in the first porous body. For example, the second porous body has a mesh structure having a number of rectangular pores. A lattice-shaped porous layer portion provided around the rectangular pore functions as a second working fluid supply part supplying the working fluid to the first porous body. The rectangular pore functions as a second vapor discharge part discharging the vapor discharged from the first porous body into the working fluid. The second porous body has a higher permeability of the working fluid compared with the first porous body, and has a function for holding the working fluid. The second porous body functions to promptly supply the working fluid to the first porous body even while a coalesced bubble is retained in an upper part of the second porous body.

The second porous body has a pore radius greater than that of the first porous body to facilitate the passage of the working fluid, which can set the permeability of the working fluid to be higher compared with the first porous body. Herein, the pore radius of the porous body may be a radius of a pore originally included in each of the porous bodies, or a radius of a pore formed in each of the porous bodies. Herein, the pore of the porous body may have various shapes such as a polygonal shape, a circular shape, and an elliptical shape, and the "pore radius" of the present invention represents a radius of a circumscribed circle in the various pore shapes. Furthermore, the second porous body has a void ratio greater than that of the first porous body to facilitate the passage of the working fluid, which can set the permeability of the working fluid to be higher compared with the first porous body. The void ratio of the porous body can be increased by, for example, adjusting the particle size and amount or the like of a binder mixed with a metal powder in the manufacturing process of the porous body.

The working fluid may be a liquid having surface tension such as water, a low-temperature fluid, a refrigerant, or an organic solvent, for example.

Concerning the structure of the first porous body, since the contact area of the first porous body to the contact part is increased, the size of the pore for letting the vapor generated in the contact part out into water is preferably decreased, and may be 100 to 2000 µm, for example. Since pressure loss when the vapor passes through the bottom part of the porous body can be decreased, a distance between the pores for letting the vapor generated in the contact part out into water is preferably decreased, and may be 100 to 1000 µm, for example.

The porous substance constituting the first working fluid supply part in the first porous body may be ceramics such as cordierite or a sintering metal, for example. Particularly, the first working fluid supply part desirably includes a porous body having a good wettability such as an oxide, or a porous body subjected to processing such as plasma irradiation to improve a wettability.

The first porous body supplies the working fluid to the contact part according to capillary action if the liquid is vaporized in the first working fluid supply part. When the length of a capillary tube (that is, the thickness of the first porous body) is decreased considering a limit mechanism of liquid supply by a capillary force, the limit of the liquid supply, i.e., a "critical heat flux", can be further increased. On the other hand, FIG. 3 shows a condition that a vapor mass is formed on the contact part under a high heat flux condition. The volume of the vapor mass is increased with time, and the vapor mass is eventually broken and separated from the contact part. The vicinity of the vapor mass and the contact part will be described in detail. A liquid film (generally, referred to as a macro liquid film) having a finite thickness is present between the vapor mass and the contact part (that is, in the bottom part of the vapor mass). When the macro liquid film of the bottom part of the vapor mass is vaporized and exhausted while the vapor mass is retained on the macro liquid film under such a high heat flux condition, burnout occurs. The heat flux at this time is referred to as the "critical heat flux". The thickness of the first porous body is preferably decreased from the viewpoint of the limit mechanism of the liquid supply due to the capillary force (capillary limit mechanism) as described above. When the first porous body is too thin, and the thickness of the first porous body is comparable with the thickness of the macro liquid film, the dryout is apt to occur near the contact part of the first porous body, which causes a decrease in the critical heat flux.

Thus, the thickness of the porous body provided on the contact part which is in contact with the heat generation element is preferably decreased from the viewpoint of the capillary limit mechanism. When the porous body is thinner than the macro liquid film, the dryout is apt to occur in the porous body, which disadvantageously causes the decrease in the critical heat flux. In the present invention, the porous body provided on the contact part which is in contact with the heat generation element is the first porous body, and the second porous body having a higher permeability of the working fluid compared with the first porous body is provided on the first porous body (on the working fluid side). Such a constitution can suppress the occurrence of the dryout to prevent the decrease in the critical heat flux even if the thickness of the first porous body is decreased since the second porous body plentifully supplying the working fluid toward the first porous body is present between the first porous body and the vapor mass above the first porous body. Since the liquid supply amount of the second porous body is preferably increased, the thickness of the second porous body is also preferably increased. Specifically, when the thickness of the first porous body is decreased to about 100 µm, for example, the thickness of the second porous body is preferably about 1 to 2 mm or more.

The second porous body may be made of ceramics such as cordierite. The second porous body is particularly preferably made of a metal from the viewpoint of processability or strength. The second porous body particularly desirably includes a porous body having a good wettability such as an oxide, or a porous body subjected to processing such as plasma irradiation to improve a wettability.

FIG. 5 shows the form in which both the first and second porous bodies are circular, and both the first and second vapor discharge parts are lattice-shaped, and the porous bodies are not limited to the form. The first and second vapor discharge parts may be honeycomb-shaped, for example. As illustrated in FIG. 5, the first and second working fluid supply parts and vapor discharge parts are orthogonal to the contact part located below and the working fluid side located above. The first and second working fluid supply parts and vapor discharge parts may apply a curved course and a bent course, for example, without being orthogonal to the contact part and the working fluid side as long as these apply a course between a surface brought into contact with the contact part and a surface brought into contact with the working fluid. In the present embodiment, the rectangular pore included in each of the porous bodies functions as the vapor discharge part as described above. The shape of the pore may be the other polygonal shape, circular shape, or elliptical shape or the like without particular limitation. The pore may be a pore originally included in each of the porous bodies, or a pore formed in each of the porous bodies.

The forms of the first and second porous bodies are not particularly limited, and both the first and second porous bodies may include an aggregate of porous particles, for example. Both the first and second porous bodies may include a porous layer. Furthermore, one of the first and second porous bodies may include an aggregate of porous particles, and the other may include a porous layer. When the first and second porous bodies include an aggregate of porous particles, a clearance between a plurality of porous particles may have a function as the vapor discharge part, for example, and the member around the clearance may function as the working fluid supply part.

The stacked structure of the cooling member is not limited to the stacked structure including the first and second porous bodies. The cooling member may have a stacked structure including three layers in total. The stacked structure includes the first and second porous bodies, and a third porous body provided on the working fluid side of the second porous body. In this case, the third porous body includes a working fluid supply part supplying the working fluid to the second porous body, and a vapor discharge part discharging the vapor discharged from the second porous body into the working fluid. Similarly, the cooling member may have a stacked structure including four layers or more in total. The stacked structure includes a plurality of porous bodies stacked on the working fluid side of the second porous body.

A clearance region is preferably formed between the first porous body of the cooling member and the contact part which is in contact with the heat generation element. The vapor generated on the bottom face of the first working fluid supply part of the first porous body advances along the bottom face of the first working fluid supply part, and enters into the first vapor discharge part. The vapor is discharged upward from the first vapor discharge part. Herein, when the clearance region is formed between the first porous body of the cooling member and the contact part which is in contact with the heat generation element, the clearance region serve as the passage of the vapor generated on the bottom face of the first porous body, and promotes the discharge of the vapor, which provides an improvement in the critical heat flux. Although the surface of the contact part may be daringly processed to a rough surface, the clearance region is slightly required for discharging the vapor. Therefore, by merely bringing the first porous body into contact with the contact part, the clearance region is sufficiently formed according to the original surface roughness of the contact part. When the clearance region is absent, the discharging property of the vapor is decreased. The first porous body may be fixed to the contact part with an adhesive.

As another aspect of the present invention, cooling can be performed by immersing the entire heat generation element into the working fluid, or immersing a part of the heat generation element into the liquid surface of the working fluid. In this case, the heat generation element possibly takes various forms such as a floating state and a state where it is placed on the bottom face of the container. In short, by attaching the cooling member having the stacked structure including the first and second porous bodies to the portion immersed into the working fluid, cooling can be performed as in the above example.

Since the liquid is forcibly supplied to the contact part by capillary action when the vapor is generated in the working fluid supply part of the first porous body and the contact part according to the present invention, the container (water tank) accommodating the working fluid such as water can use a mere puddle without having the necessity of including a flow passage of water or the like in the case of a pool boiling cooling system. Furthermore, the container does not require a pump, which can provide a simple structure, thereby providing a low installation cost and a low running cost. In the present invention, the porous body provided on the contact part which is in contact with the heat generation element is the first porous body, and the second porous body having a higher permeability of the working fluid compared with the first porous body is provided on the first porous body (on the working fluid side). Such a constitution can suppress the occurrence of the dryout to prevent the decrease in the critical heat flux even if the thickness of the first porous body is decreased since the second porous body plentifully supplying the working fluid toward the first porous body is present between the first porous body and the vapor mass above the first porous body. The decrease in the critical heat flux can be prevented by the similar method even in a forced flow boiling cooling in which the flow passage is provided and the working fluid is circulated by the pump although the installation cost and the running cost in the forced flow boiling cooling are higher than those in the pool boiling cooling system.

### (Second Embodiment)

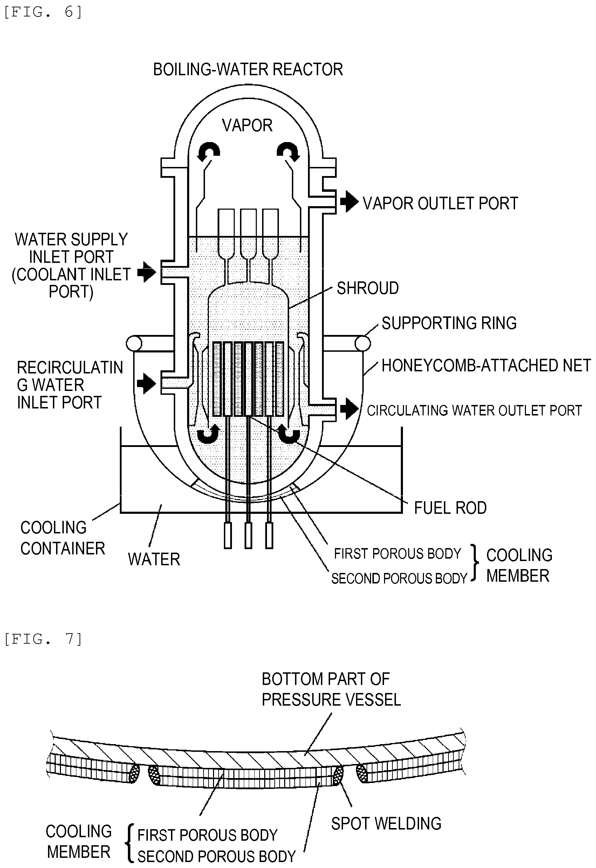

FIG. 6 shows a schematic view of a cooler provided in a bottom part of a reactor pressure vessel of a light-water reactor according to a second embodiment. A supporting ring is attached in the peripheral direction of a reactor from the side so as to surround the reactor. A honeycomb-attached net (metal mesh) supported by the supporting ring is attached. The honeycomb-attached net may not be made of a metal, and may be made of a heat-resistant resin. As a method for attaching the cooler in the bottom part of the reactor pressure vessel, first, a cooling member having a stacked structure including first and second honeycomb-shaped porous bodies is provided so as to cover the bottom part of the reactor pressure vessel, and temporarily fixed. Next, the honeycomb-attached net is taken down from the supporting ring to cover the bottom part of the reactor pressure vessel. Then, the honeycomb-attached net is drawn near the supporting ring to bring the honeycomb-attached net into contact with the bottom part of the reactor pressure vessel. In this way, the cooler can be simply attached to the bottom part of the reactor pressure vessel. The cooling member is held from the bottom by the honeycomb-attached net. The honeycomb-attached net may not be a mesh, and may be formed using a plurality of tapes providing simpler construction. A portion including deepest part of the bottom part of the reactor pressure vessel is immersed in a container accommodating water. The first and second porous bodies of the cooling member have the same structures as those of the first embodiment, which can achieve a good critical heat flux, and achieve a critical heat flux which is about 2000 kW/m² required in order to prevent the melt-through of the bottom part of the reactor pressure vessel, or about 2500 kW/m² or more. Thus, the cooler according to the present invention is particularly suitable for cooling the bottom part of the reactor pressure vessel in the case of a reactor accident. Although the cooling member covers a part of the bottom part of the reactor pressure vessel in FIG. 6, the cooling member may be provided so as to cover the entire portion of the bottom part of the reactor pressure vessel immersed in the container accommodating water.

The cooling member including the honeycomb-shaped first and second porous bodies so as to cover the bottom part of the reactor pressure vessel of the second embodiment may be supported without using the honeycomb-attached net. For example, as shown in FIG. 7, the second porous body may be made of a metal, and the first and second porous bodies may be supported by fixing the end of the second porous body to the bottom part of the reactor pressure vessel which is a heat generation element by welding. The welding is preferably spot welding which provides easy work and a sufficient supporting force. A heat release fin may be welded to the heat generation element, and the second porous body may be fixed to the heat release fin by welding. According to such a constitution, heat from the heat generation element is emitted from the heat release fin, and thereby the heat generation element can be more sufficiently cooled.

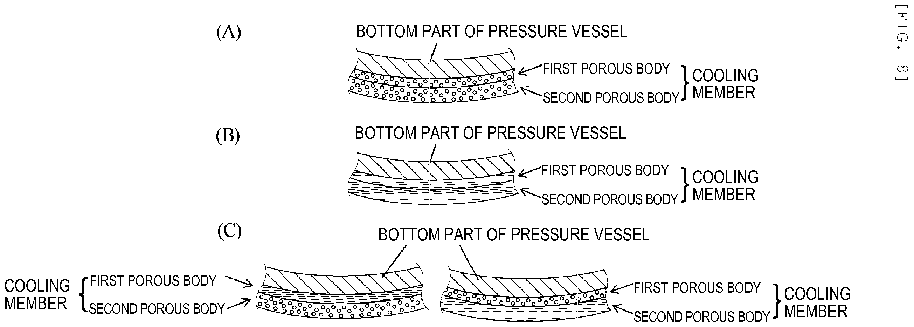

In the second embodiment, as shown in FIG. 8A, both the first and second porous bodies may include an aggregate of porous particles. As shown in FIG. 8B, both the first and second porous body may include a porous layer. Furthermore, as shown in FIG. 8C, one of the first and second porous bodies may include an aggregate of porous particles, and the other may include a porous layer. When the porous body includes an aggregate of porous particles in FIG. 8, the aggregate of porous particles is wrapped with a fine mesh material through which the particles cannot pass. Examples of the mesh material include, but are not particularly limited to, a mesh material formed by a honeycomb-attached net made of a metal or a heat-resistant resin.

### (Third Embodiment)

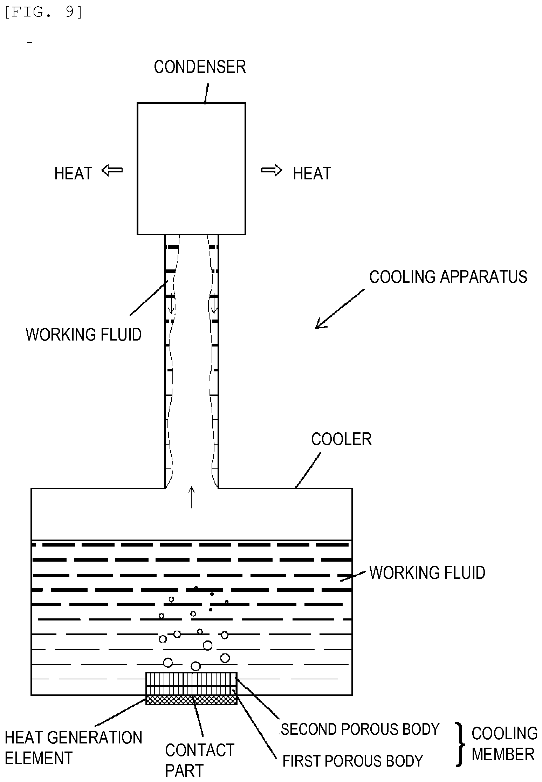

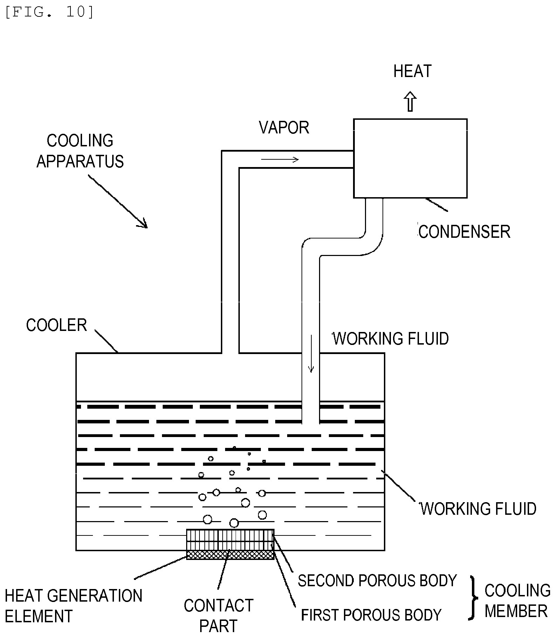

FIG. 9 shows a cooling apparatus according to a third embodiment. The cooling apparatus includes the cooler according to the first embodiment, and a condenser connected to a container. In the condenser, a vaporized working fluid is liquidized, and the liquidized working fluid is returned to the container. The cooling apparatus has excellent compactability and energy saving as the entire apparatus without requiring an external power source such as a pump. FIG. 10 shows a variant form of the cooling apparatus according to the third embodiment. The constitutions of FIGS. 9 and 10 may also be used with the cooler of the second embodiment.

### (Fourth Embodiment)

In a cooling apparatus of the present invention, as a fourth embodiment, first porous bodies and second porous bodies which are included in a cooling member may be constituted so that the porous bodies having a gradually greater pore size are stacked in a stepwise fashion on the porous body having a small pore size. Preferably, the fine pore size of the porous body directly brought into contact with a bulk liquid at this time is different, and preferably largely different from the diameters of fine particles such as garbage which are largely present in a working fluid such as water. For example, preferably, the fine pore size of the porous body directly brought into contact with the bulk liquid is sufficiently greater, or sufficiently smaller than the diameters of the fine particles. Such a constitution can be expected to exhibit an effect of suppressing a clog phenomenon caused by the entering of the fine particles which are present in the working fluid into a deep part of the porous body, which provides an effect of maintaining a liquid supply effect to a heating surface by the porous body for a long time. In principle, for example, when the porous bodies having a gradually greater pore size are stacked in a stepwise fashion on the porous body having a small pore size, and the outermost fine pore size of the porous body is sufficiently greater or sufficiently smaller than the particle size of the garbage in the working fluid, the inflowing garbage particles do not infiltrate into the deep part of the porous body immediately. The garbage particles accumulate near the inlet port of the porous body under the influence of stagnation or the like formed in the shallow region of the porous body. Therefore, fine pores of 300 µm located in the outermost region of the porous body are first clogged, which sufficiently suppresses the formation of the clog in the porous body caused by the infiltration of the fine particles into the deep part of the porous body.

### (Fifth Embodiment)

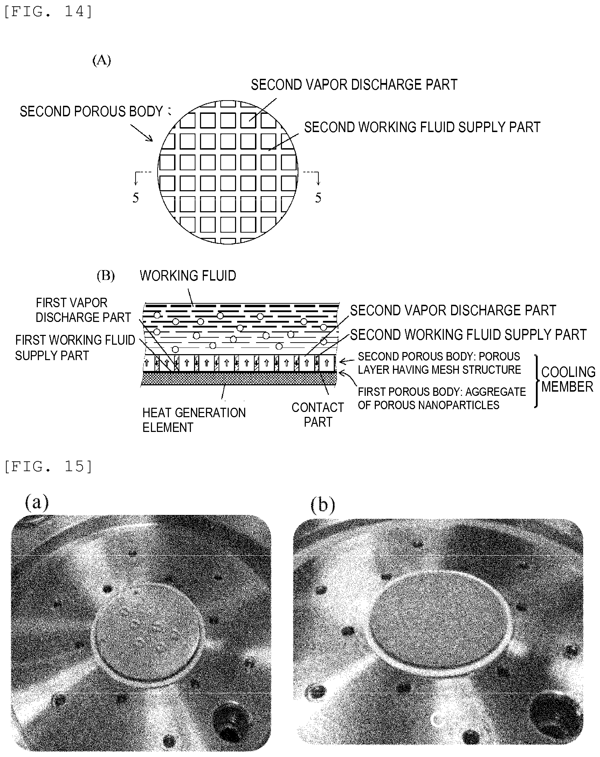

FIG. 14 shows a cooling apparatus according to a fifth embodiment. As shown in FIG. 14, a first porous body may include an aggregate of porous nanoparticles, and a second porous body may include a porous layer having a mesh structure. FIG. 14A is a top view of the second porous body including the porous layer having the mesh structure having a number of rectangular pores. FIG. 14B is a 5-5 sectional view in a state where a cooling member is provided in a contact part. The first porous body includes an aggregate of nanoparticles having an average particle size of 10 to 50 nm. For example, a metal, an alloy, an oxide, a nitride, a carbide, and carbon or the like can be used as the nanoparticles.

As a method for installing the cooling member according to the fifth embodiment, for example, an aqueous solution including diffused nanoparticles is provided on a heating surface as a position in which a first porous body is desired to be formed, by a predetermined means, and the aqueous solution is boiled on the heating surface by heating while the state is maintained. Thus, porous nanoparticles in the boiled aqueous solution are deposited on the heating surface to constitute an aggregate. This serves as the first porous body. Next, a second porous body including a porous layer having a mesh structure is provided on the aggregate of porous nanoparticles. Thereby, the cooling member including the first porous body including the aggregate of porous nanoparticles and the second porous body including the porous layer having the mesh structure can be provided. The cooling member may be provided by providing a second porous body on the surface of a heat generation element, and subsequently providing a first porous body between the surface of the heat generation element and the second porous body. As such a constitution, for example, the first porous body is formed between the heat generation element and a second porous body by dispersing nanoparticles in a working fluid, providing the second porous body including a porous layer having a mesh structure on the surface of a portion of the heat generation element immersed in the working fluid, and depositing the nanoparticles in the working fluid boiled by heat from the heat generation element on the heating surface of the heat generation element to constitute the aggregate of porous nanoparticles. Thereby the cooling member is attached to the surface of the portion of the heat generation element immersed in the working fluid. Specifically, for example, a honeycomb porous body (second porous body) is previously provided in a pressure vessel of a reactor. The nanoparticles are supplied to the working fluid upon occurrence of an accident, and dispersed. Subsequently, the working fluid including the nanoparticles is boiled on the working fluid side surface (heating surface) of the pressure vessel, and thereby the first porous body including the aggregate of porous nanoparticles is formed between the heating surface and the second porous body.

In the aggregate of nanoparticles included in the first porous body in the fifth embodiment, a number of fine pores between the particles or in the particles are included in a first working fluid supply part or a first vapor discharge part. Also in the present embodiment, the first porous body performs the supply of the working fluid and the discharge of the vapor in separate courses, and thereby the occurrence of a problem that the vapor covers the contact part, which causes the restriction of a critical heat flux, can be suppressed, as described with reference to FIG. 3. In the second porous body, a lattice-shaped porous layer portion around the rectangular pore functions as a second working fluid supply part supplying the working fluid to the first porous body. The rectangular pore functions as a second vapor discharge part discharging the vapor discharged from the first porous body into the working fluid. The second porous body has a higher permeability of the working fluid compared with the first porous body, and has a function for holding the working fluid. The second porous body functions to promptly supply the working fluid to the first porous body even while a coalesced bubble is retained in the upper part of the second porous body. Since the first porous body includes the aggregate of porous nanoparticles in the fifth embodiment, the wettability of the heating surface is improved, and the supply property of the working fluid to the heating surface is further improved by using the second porous body including the porous layer having the mesh structure. This makes it difficult to produce the dry region of the heating surface, and can prevent the decrease in the critical heat flux.

The present invention can be applied to various electronic devices and thermal instruments having a high-heat-generating density in addition to the cooling of the reactor pressure vessel. Examples thereof include diverter cooling of a fusion reactor, an improvement in performance of capillary pump loop, a semiconductor laser, cooling of a server of a data center, a chlorofluorocarbon cooling system chopper control device a power electronic device, or the like. The present invention can be applied to a water-cooling jacket for improving a high temperature work environment by reducing heat diffused to an ambient environment from the side part and bottom part of a glass or aluminum melting furnace. Furthermore, the present invention can be applied to a water-cooling jacket which cools a refractory wall for a large garbage incinerator or the like from the outside to reduce the damage and is installed in the side part and bottom part of the refractory wall.

### Examples

Hereinafter, the present invention will be described in more detail with reference to Examples, but the present invention is not limited thereto.

### (Test Example 1)

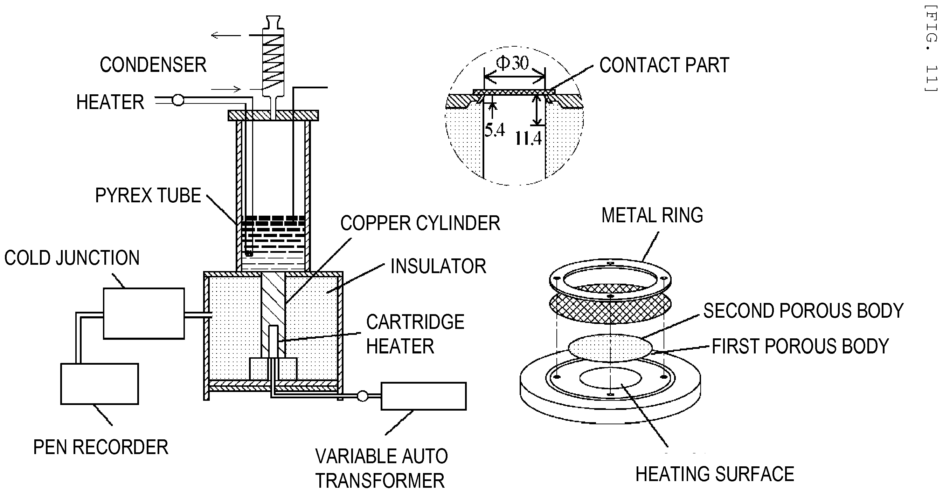

FIG. 11 shows a schematic view of an experiment device. The diameter of a contact part brought into contact with a working fluid was set to 30 mm. A copper cylinder in which a cartridge heater was embedded was used as a heat generation element. A heating amount was controlled by controlling a voltage to be applied to the cartridge heater with a variable auto transformer. A superheat degree of the contact part was obtained according to extrapolation using outputs from two φ 0.5 K type sheathed thermocouples installed on the central axis of the copper cylinder separated by 5.4 mm and 11.4 mm from the contact part, respectively. A heat flux was obtained according to Fourier's formula from an indicated temperature difference, an installing distance, and a thermal conductivity. A Pyrex (registered trademark) tube having an inner size of 87 mm and an outer size of 100 mm was used as a container, and allowed the observation of an internal boiling condition. The depth of distilled water as the working fluid was set to 60 mm, and the distilled water was heated by a heater to maintain the distilled water at a saturation temperature. Generated vapor was condensed by a condenser provided on the upper end of the Pyrex (registered trademark) tube, and the condensed vapor was returned into the container.

A circular disk having a composition including a mixture of cellulose acetate and cellulose nitrate (brand name: MF-Millipore) was used as a first porous body of a cooling member. The circular disk of the first porous body had a diameter of 30 mm, a pore radius of 0.8 µm, a void ratio of 80%, and a board thickness of 0.15 mm. A circular disk including a porous body made of a SUS board (SUS316L) was used as a second porous body of the cooling member. The circular disk of the second porous body had a diameter of 30 mm, a pore radius of 10 µm, a void ratio of 70%, and a board thickness of 1 mm. The permeability of the second porous body was ten times or so as much as that of the first porous body.

The second porous body was mounted on the first porous body having such a constitution to provide the cooling member.

In an experiment, heating was performed while the voltage of a cartridge heater was raised by 5 V under atmospheric pressure (0.1 MPa). A sufficient steady state was confirmed, and the output voltages of the thermocouples were recorded. Herein, steady state was determined according to whether a temperature change for 20 minutes was 1 K or less. This operation was repeated until the steady state could not be maintained. A comparison experiment was performed for the case where the cooling member was not installed (naked surface), the case where only the first porous body was installed, and the case where only the second porous body was installed, in addition to the case where the above-mentioned cooling member was installed.

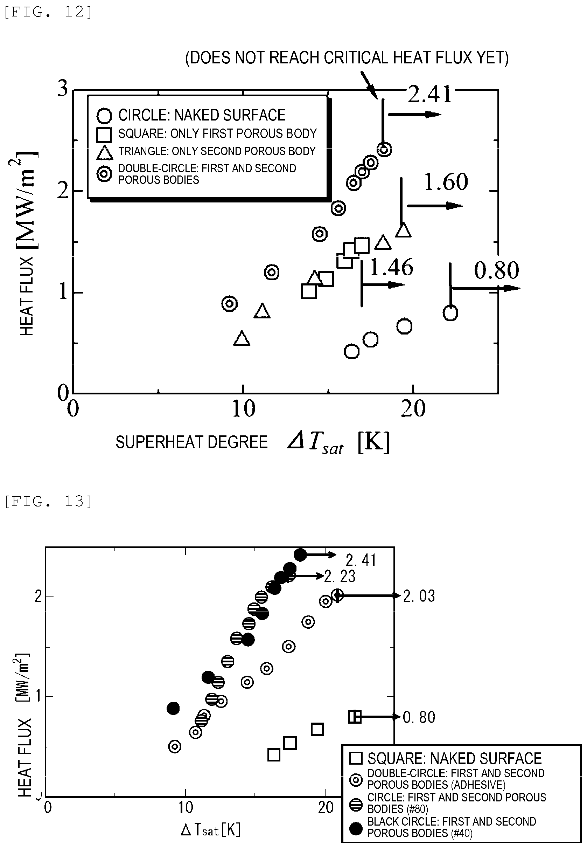

FIG. 12 shows a boiling curve obtained in the experiment. The boiling curve expresses boiling heat transmission characteristics. The heat flux is taken as a vertical axis, and a difference between a heat generation element temperature and the saturation temperature of a liquid, i.e., a superheat degree ΔTₛₐₜ [K] of the contact part is taken as a horizontal axis. An arrow in FIG. 12 shows a burnout originating point which is a point that cooling capacity is remarkably deteriorated and the temperature of the contact part sharply rises. A value [MW/m²] of a critical heat flux at that time is shown in FIG. 12. When nothing was installed in the contact part, i.e., in the case of the naked surface, the critical heat flux was 0.8 MW/m². When only the first porous body was installed on the contact part, the critical heat flux was 1.46 MW/m², and improved as compared with the case of the naked surface. On the other hand, when the first and second porous bodies were installed, the heat could be stably removed even when the critical heat flux was 2.41 MW/m². Since the heater was damaged before the state of the critical heat flux at this time, the value of 2.41 MW/m² shown in FIG. 12 was still not the value of the critical heat flux. From FIG. 12, the critical heat flux in the case where the cooling member was provided was much higher than that in the other cases, and the result of about 2.5 MW/m² which was a target was obtained. Furthermore, in order to consider the influence of the second porous body, an experiment was performed also for the case where only the second porous body was installed. As a result, the critical heat flux was 1.60 MW/m², and smaller than the critical heat flux when the first and second porous bodies were installed. Therefore, it was found that the critical heat flux is highest when the first and second porous bodies are installed.

### (Test Example 2)

Subsequently, in order to consider the relation between the surface roughness of the surface of a contact part (heating surface) and a critical heat flux, the following test was performed using the experiment device, first porous body, and second porous body of the test example 1.

First, the surface of the contact part brought into contact with the working fluid of the experiment device of the test example 1 was ground with a sandpaper (#40), and a first porous body and a second porous body were provided in this order on the surface of the contact part to provide a cooling member. The surface of the contact part brought into contact with the working fluid of the experiment device of the test example 1 was ground with a sandpaper (#80), and a first porous body and a second porous body were provided in this order on the surface of the contact part to provide a cooling member. Furthermore, a first porous body was provided on the surface of the contact part brought into contact with the working fluid of the experiment device of the test example 1, with an adhesive sandwiched therebetween, without grinding the surface of the contact part, and a second porous body was further provided on the first porous body to provide a cooling member.

Regarding these cooling members, a boiling curve was obtained in the same procedure as that of the test example 1. FIG. 13 shows the boiling curves obtained at this time. From FIG. 13, the cooling member obtained by grinding the surface of the contact member in which the surface of the contact part (heating surface) was the roughest with a sandpaper (#40) and tested had the best critical heat flux.

### (Test Example 3)

The following test was performed in order to evaluate the critical heat flux according to the cooling member shown in the fifth embodiment using the same type device as the experiment device shown in FIG. 11. In the test example 3, the diameter of a contact part brought into contact with a working fluid was set to 30 mm and 10 mm. A copper cylinder in which a cartridge heater was embedded was used as a heat generation element. A heating amount was controlled by controlling a voltage to be applied to the cartridge heater with a variable auto transformer. A superheat degree of the contact part was obtained according to extrapolation using outputs from two φ 0.5 K type sheathed thermocouples installed on the central axis of the copper cylinder separated by 9.94 mm and 15.16 mm from the contact part, respectively. A heat flux was obtained according to Fourier's formula from an indicated temperature difference, an installing distance, and a thermal conductivity. A Pyrex (registered trademark) tube having an inner size of 87 mm and an outer size of 100 mm was used as a container, and allowed the observation of an internal boiling condition. The depth of distilled water as the working fluid was set to 60 mm, and the distilled water was heated by a heater to maintain the distilled water at a saturation temperature. Generated vapor was condensed by a condenser provided on the upper end of the Pyrex (registered trademark) tube, and the condensed vapor was returned into the container.

An aggregate of porous nanoparticles was produced as a first porous body of a cooling member as follows. That is, first, nanoparticles made of titanium dioxide (average particle size: 21 nm) weighed with an electronic balance were dispersed in a beaker in which distilled water prepared previously was placed. At this time, the concentration of the nanoparticles (titanium dioxide) was 0.04 g/L. Next, a heating surface shown in FIG. 11 was provided in the container, and distilled water was supplied into the container. The water in the container was boiled. The heating surface was previously ground. FIG. 15A shows an observation photograph of the ground heating surface. Subsequently, the water including the dispersed nanoparticles was injected into the container including the boiling water. After the boiling was continued for 20 minutes as it is, the water including the dispersed nanoparticles was taken out from the container, and the heating surface was washed with distilled water. Thus, the heating surface is coated with the nanoparticles. The coating layer of the nanoparticles is included in the first porous body (aggregate of porous nanoparticles) formed on the heating surface. FIG. 15B shows an observation photograph of the heating surface coated with nanoparticles.

Next, a circular disk including a porous body made of a SUS board (SUS316L) was used as a second porous body of the cooling member (porous layer having a mesh structure). A circular disk having a diameter of 30 mm and a circular disk having a diameter of 10 mm were prepared as the circular disk of the second porous body. The circular disks had a pore radius of 10 µm, a void ratio of 70%, and a board thickness of 1 mm.

The second porous body having such a constitution (porous layer having a mesh structure) was mounted on the first porous body (aggregate of porous nanoparticles) to provide the cooling member.

In an experiment, heating was performed while the voltage of a cartridge heater was raised by 5 V under atmospheric pressure (0.1 MPa). A sufficient steady state was confirmed, and the output voltages of the thermocouples were recorded. Herein, steady state was determined according to whether a temperature change for 20 minutes was 1 K or less. This operation was repeated until the steady state could not be maintained. A comparison experiment was performed for the case where the cooling member was not installed (naked surface), the case where only the first porous body (aggregate of porous nanoparticles) was installed, and the case where only the second porous body (porous layer having a mesh structure) was installed, in addition to the case where the above-mentioned cooling member was installed.

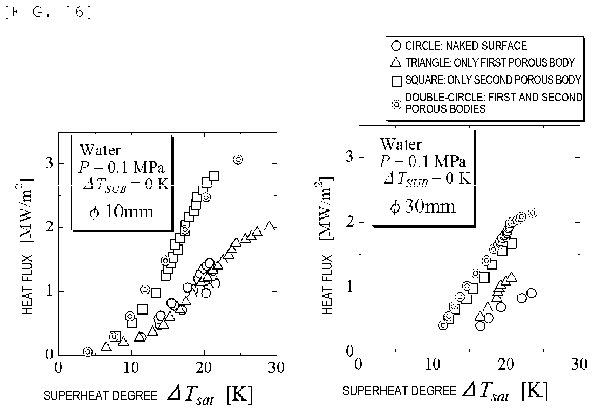

FIG. 16 shows a boiling curve obtained in the experiment. When nothing was installed in a contact part, i.e., in the case of the naked surface, the critical heat flux was 1.4 MW/m² (heating surface φ 10 mm) and 0.9 MW/m² (heating surface φ 30 mm). When only the first porous body (aggregate of porous nanoparticles) was installed on the contact part, the critical heat flux was 2.0 MW/m² (heating surface φ 10 mm) and 1.2 MW/m² (heating surface φ 30 mm), and improved as compared with the case of the naked surface. On the other hand, when the first porous body (aggregate of porous nanoparticles) and the second porous body (porous layer having a mesh structure) were installed, the heat could be stably removed even when the critical heat flux was 3.1 MW/m² (heating surface φ 10 mm) and 2.2 MW/m² (heating surface φ 30 mm). Since the heater was damaged before the state of the critical heat flux at this time, the value of 3.1 MW/m² (heating surface φ 10 mm) and the value of 2.2 MW/m² (heating surface φ 30 mm) shown in FIG. 16 were still not the value of the critical heat flux. Furthermore, an experiment was performed also for the case where only the second porous body (porous layer having a mesh structure) was installed. As a result, the critical heat flux was 2.8 MW/m² (heating surface φ 10 mm) and 1.7 MW/m² (heating surface φ 30 mm), and smaller than the critical heat flux when the first porous body (aggregate of porous nanoparticles) and the second porous body (porous layer having a mesh structure) were installed. Therefore, it was found that the critical heat flux is the highest when the first porous body (aggregate of porous nanoparticles) and the second porous body (porous layer having a mesh structure) are installed.

## Claims

1. A boiling system cooler for cooling a heat generation element comprising:
a container accommodating a working fluid; and
a cooling member provided in the container so as to be brought into contact with the working fluid and to face the heat generation element,
wherein the cooling member has a stacked structure including a first porous body provided on the heat generation element side and a second porous body provided on the working fluid side,
the first porous body includes: a first working fluid supply part supplying the working fluid, by capillary action, to a contact part which is in contact with the heat generation element; and a first vapor discharge part discharging vapor generated in the contact part to the second porous body side,
the second porous body includes: a second working fluid supply part supplying the working fluid to the first porous body; and a second vapor discharge part discharging the vapor discharged from the first porous body, into the working fluid, and
the second porous body has a higher permeability of the working fluid compared with the first porous body.

2. The cooler according to claim 1, wherein the second porous body has a pore radius greater than that of the first porous body and/or a void ratio greater than that of the first porous body, to set the permeability of the working fluid to be higher compared with the first porous body.

3. The cooler according to claim 1 or 2, wherein both the first and second porous bodies include an aggregate of porous particles.

4. The cooler according to claim 1 or 2, wherein both the first and second porous bodies include a porous layer.

5. The cooler according to claim 1 or 2, wherein one of the first and second porous bodies includes an aggregate of porous particles, and the other includes a porous layer.

6. The cooler according to claim 5, wherein the first porous body includes an aggregate of porous nanoparticles and the second porous body includes a porous layer having a mesh structure.

7. The cooler according to claim 4 or 5, wherein the first porous body includes a porous layer and the first vapor discharge part is a pore penetrating the porous layer.

8. The cooler according to any one of claims 1 to 7, wherein a clearance region is formed between the first porous body and the contact part which is in contact with the heat generation element.

9. The cooler according to any one of claims 1 to 8, wherein the second porous body is made of a metal.

10. The cooler according to claim 9, wherein the second porous body made of the metal has an end fixed to the heat generation element by welding.

11. The cooler according to claim 9, further comprising a heat release fin welded to the heat generation element, wherein the second porous body is fixed to the heat release fin by welding.

12. A cooling apparatus comprising:
the cooler according to any one of claims 1 to 11; and
a condenser connected to a container included in the cooler and liquidizing a vaporized working fluid.

13. A boiling system cooling method for at least partially immersing a heat generation element in a working fluid accommodated in a container to cool the heat generation element,
the cooling method comprising attaching a cooling member to a surface of a portion of the heat generation element immersed in the working fluid,
wherein the cooling member has a stacked structure including a first porous body provided on the heat generation element side and a second porous body provided on the working fluid side,
the first porous body includes: a first working fluid supply part supplying the working fluid, by capillary action, to a contact part which is in contact with the heat generation element; and a first vapor discharge part discharging vapor generated in the contact part to the second porous body side,
the second porous body includes: a second working fluid supply part supplying the working fluid to the first porous body; and a second vapor discharge part discharging the vapor discharged from the first porous body, into the working fluid, and
the second porous body has a higher permeability of the working fluid compared with the first porous body.

14. The cooling method according to claim 13, wherein
nanoparticles are dispersed in the working fluid,
the second porous body including a porous layer having a mesh structure is provided on the surface of the portion of the heat generation element immersed in the working fluid, and
an aggregate of porous nanoparticles is constituted by depositing the nanoparticles in the working fluid boiled by heat from the heat generation element on a heating surface of the heat generation element, to form the first porous body between the heat generation element and the second porous body, which attaches the cooling member to the surface of the portion of the heat generation element immersed in the working fluid.

## Patentansprüche

1. Kochsystemkühler zum Kühlen eines Wärmeerzeugungselements, das Folgendes umfasst:
einen Behälter zum Aufnehmen eines Arbeitsfluids; und
ein Kühlelement, das so in dem Behälter vorgesehen ist, dass es mit dem Arbeitsfluid in Kontakt gebracht werden und dem Wärmeerzeugungselement zugewandt sein kann,
wobei das Kühlelement eine gestapelte Struktur mit einem auf der Wärmeerzeugungselementeseite vorgesehenen ersten porösen Körper und einem auf der Arbeitsfluidseite vorgesehenen zweiten porösen Körper hat,
wobei der erste poröse Körper Folgendes beinhaltet: einen ersten Arbeitsfluidzuführungsteil zum Zuführen des Arbeitsfluids durch Kapillarwirkung zu einem Kontaktteil, der mit dem Wärmeerzeugungselement in Kontakt ist; und einen ersten Dampfablassteil zum Ablassen von in dem Kontaktteil erzeugtem Dampf zur zweiten porösen Körperseite,
wobei der zweite poröse Körper Folgendes beinhaltet: einen zweiten Arbeitsfluidzuführungsteil zum Zuführen des Arbeitsfluids zu dem ersten porösen Körper; und einen zweiten Dampfablassteil zum Ablassen des aus dem ersten porösen Körper abgelassenen Dampfes in das Arbeitsfluid, und
wobei der zweite poröse Körper eine höhere Durchlässigkeit für das Arbeitsfluid hat als der erste poröse Körper.

2. Kühler nach Anspruch 1, wobei der zweite poröse Körper einen Porenradius, der größer ist als der des ersten porösen Körpers, und/oder ein Hohlraumverhältnis hat, das größer ist als das des ersten porösen Körpers, um die Durchlässigkeit des Arbeitsfluids so einzustellen, dass sie höher ist als die des ersten porösen Körpers.

3. Kühler nach Anspruch 1 oder 2, wobei sowohl der erste als auch der zweite poröse Körper ein Aggregat von porösen Partikeln enthalten.

4. Kühler nach Anspruch 1 oder 2, wobei sowohl der erste als auch der zweite poröse Körper eine poröse Schicht aufweisen.

5. Kühler nach Anspruch 1 oder 2, wobei einer aus erstem und zweitem porösem Körper ein Aggregat von porösen Partikeln und der andere eine poröse Schicht aufweist.

6. Kühler nach Anspruch 5, wobei der erste poröse Körper ein Aggregat von porösen Nanopartikeln enthält und der zweite poröse Körper eine poröse Schicht mit einer Maschenstruktur aufweist.

7. Kühler nach Anspruch 4 oder 5, wobei der erste poröse Körper eine poröse Schicht aufweist und der erste Dampfablassteil eine die poröse Schicht durchdringende Pore ist.

8. Kühler nach einem der Ansprüche 1 bis 7, wobei eine Freiraumregion zwischen dem ersten porösen Körper und dem Kontaktteil gebildet wird, die mit dem Wärmeerzeugungselement in Kontakt ist.

9. Kühler nach einem der Ansprüche 1 bis 8, wobei der zweite poröse Körper aus einem Metall besteht.

10. Kühler nach Anspruch 9, wobei der zweite poröse Körper aus dem Metall ein Ende hat, das durch Schweißen an dem Wärmeerzeugungselement befestigt ist.

11. Kühler nach Anspruch 9, der ferner eine Wärmeabgaberippe umfasst, die an das Wärmeerzeugungselement geschweißt ist, wobei der zweite poröse Körper durch Schweißen an der Wärmeabgaberippe befestigt ist.

12. Kühlvorrichtung, die Folgendes umfasst:
den Kühler nach einem der Ansprüche 1 bis 11; und
einen Kondensator, der mit einem in dem Kühler enthaltenen Behälter verbunden ist, der ein vaporisiertes Arbeitsfluid verflüssigt.

13. Kochsystem-Kühlverfahren zum wenigstens teilweisen Eintauchen eines Wärmeerzeugungselements in ein in einem Behälter enthaltenes Arbeitsfluid, um das Wärmeerzeugungselement zu kühlen,
wobei das Kühlverfahren das Anbringen eines Kühlelements an einer Oberfläche eines Teils des in dem Arbeitsfluid eingetauchten Wärmeerzeugungselements beinhaltet,
wobei das Kühlelement eine gestapelte Struktur mit einem auf der Wärmeerzeugungselementeseite vorgesehenen ersten porösen Körper und einem auf der Arbeitsfluidseite vorgesehenen zweiten porösen Körper hat,
wobei der erste poröse Körper Folgendes beinhaltet: einen ersten Arbeitsfluidzuführungsteil zum Zuführen des Arbeitsfluids durch Kapillarwirkung zu einem Kontaktteil, der mit dem Wärmeerzeugungselement in Kontakt ist; und einen ersten Dampfablassteil zum Ablassen von in dem Kontaktteil erzeugtem Dampf zu der zweiten porösen Körperseite,
wobei der zweite poröse Körper Folgendes beinhaltet: einen zweiten Arbeitsfluidzuführungsteil zum Zuführen des Arbeitsfluids zu dem ersten porösen Körper; und einen zweiten Dampfablassteil zum Ablassen des von dem ersten porösen Körper abgelassenen Dampfs in das Arbeitsfluid, und
wobei der zweite poröse Körper eine höhere Durchlässigkeit für das Arbeitsfluid hat als der erste poröse Körper.

14. Kühlverfahren nach Anspruch 13, wobei
Nanopartikel in dem Arbeitsfluid dispergiert sind,
der zweite poröse Körper einschließlich einer porösen Schicht mit einer Maschenstruktur auf der Oberfläche des in das Arbeitsfluid eingetauchten Teils des Wärmeerzeugungselements vorgesehen ist, und
ein Aggregat von porösen Nanopartikeln durch Absetzen der Nanopartikel in dem durch Wärme von dem Wärmeerzeugungselement gekochten Arbeitsfluid auf einer Heizfläche des Wärmeerzeugungselements gebildet wird, um den ersten porösen Körper zwischen dem Wärmeerzeugungselement und dem zweiten porösen Körper zu bilden, so dass das Kühlelement an der Oberfläche des in das Arbeitsfluid eingetauchten Teils des Wärmeerzeugungselements angebracht wird.

## Revendications

1. Refroidisseur de système bouillant pour refroidir un élément générateur de chaleur comprenant :
un contenant abritant un fluide de travail ; et
un élément de refroidissement prévu dans le contenant de sorte à être amené au contact du fluide de travail et à faire face à l'élément générateur de chaleur,
cas dans lequel l'élément de refroidissement possède une structure empilée incluant un premier corps poreux prévu sur le côté élément générateur de chaleur et un deuxième corps poreux prévu sur le côté fluide de travail,
le premier corps poreux incluant : une première partie d'alimentation de fluide de travail fournissant le fluide de travail, par action capillaire, à une partie de contact qui est au contact de l'élément générateur de chaleur ; et une première partie de décharge de vapeur déchargeant la vapeur générée dans la partie de contact vers le côté deuxième corps poreux,
le deuxième corps poreux incluant : une deuxième partie d'alimentation de fluide de travail fournissant le fluide de travail au premier corps poreux ; et une deuxième partie de décharge de vapeur déchargeant la vapeur déchargée depuis le premier corps poreux, jusque dans le fluide de travail, et
le deuxième corps poreux ayant une perméabilité plus élevée du fluide de travail en comparaison avec le premier corps poreux.

2. Refroidisseur selon la revendication 1, le deuxième corps poreux ayant un rayon de pore qui est supérieur à celui du premier corps poreux et/ou un rapport de volume vide qui est supérieur à celui du premier corps poreux, afin de régler la perméabilité du fluide de travail pour qu'elle soit plus élevée en comparaison avec le premier corps poreux.

3. Refroidisseur selon la revendication 1 ou 2, à la fois les premier et deuxième corps poreux incluant un agrégat de particules poreuses.

4. Refroidisseur selon la revendication 1 ou 2, à la fois les premier et deuxième corps poreux incluant une couche poreuse.

5. Refroidisseur selon la revendication 1 ou 2, un corps parmi les premier et deuxième corps poreux incluant un agrégat de particules poreuses, et l'autre incluant une couche poreuse.

6. Refroidisseur selon la revendication 5, le premier corps poreux incluant un agrégat de nanoparticules poreuses et le deuxième corps poreux incluant une couche poreuse possédant une structure maillée.

7. Refroidisseur selon la revendication 4 ou 5, le premier corps poreux incluant une couche poreuse et la première partie de décharge de vapeur étant un pore qui pénètre dans la couche poreuse.

8. Refroidisseur selon l'une quelconque des revendications 1 à 7, une région de dégagement étant formée entre le premier corps poreux et la partie de contact qui est au contact de l'élément générateur de chaleur.

9. Refroidisseur selon l'une quelconque des revendications 1 à 8, le deuxième corps poreux étant fabriqué en métal.

10. Refroidisseur selon la revendication 9, le deuxième corps poreux fabriqué en métal possédant une extrémité qui est fixée par soudage à l'élément générateur de chaleur.

11. Refroidisseur selon la revendication 9, comprenant en outre une ailette de libération de chaleur qui est soudée à l'élément générateur de chaleur, cas dans lequel le deuxième corps poreux est fixé par soudage à l'ailette de libération de chaleur.

12. Appareil de refroidissement comprenant :
le refroidisseur selon l'une quelconque des revendications 1 à 11 ; et
un condenseur raccordé à un contenant inclus dans le refroidisseur et assurant la liquéfaction d'un fluide de travail vaporisé.

13. Procédé de refroidissement de système bouillant pour immerger au moins partiellement un élément générateur de chaleur dans un fluide de travail abrité dans un contenant pour refroidir l'élément générateur de chaleur,
le procédé de refroidissement comprenant l'opération consistant à attacher un élément de refroidissement à une surface d'une portion de l'élément générateur de chaleur immergée dans le fluide de travail,
cas dans lequel l'élément de refroidissement possède une structure empilée incluant un premier corps poreux prévu sur le côté élément générateur de chaleur et un deuxième corps poreux prévu sur le côté fluide de travail,
le premier corps poreux incluant : une première partie d'alimentation de fluide de travail fournissant le fluide de travail, par action capillaire, à une partie de contact qui est au contact de l'élément générateur de chaleur ; et une première partie de décharge de vapeur déchargeant la vapeur générée dans la partie de contact vers le deuxième corps poreux,
le deuxième corps poreux incluant : une deuxième partie d'alimentation de fluide de travail fournissant le fluide de travail au premier corps poreux ; et une deuxième partie de décharge de vapeur déchargeant la vapeur déchargée depuis le premier corps poreux, jusque dans le fluide de travail, et
le deuxième corps poreux ayant une perméabilité plus élevée du fluide de travail en comparaison avec le premier corps poreux.

14. Procédé de refroidissement selon la revendication 13,
des nanoparticules étant dispersées dans le fluide de travail,
le deuxième corps poreux incluant une couche poreuse avec une structure maillée, étant prévu sur la surface de la portion de l'élément générateur de chaleur immergée dans le fluide de travail, et
un agrégat de nanoparticules poreuses étant constitué par le dépôt des nanoparticules dans le fluide de travail bouilli par la chaleur provenant de l'élément générateur de chaleur sur une surface chauffante de l'élément générateur de chaleur, afin de former le premier corps poreux entre l'élément générateur de chaleur et le deuxième corps poreux, qui attache l'élément de refroidissement à la surface de la portion de l'élément générateur de chaleur immergée dans le fluide de travail.
